# EUROPEAN PATENT SPECIFICATION

(11) **EP 4 316 875 B1**
(45) Date of publication and mention of the grant of the patent: **22.10.2025**
(21) Application number: 21729794.4
(22) Date of filing: 30.03.2021
(51) Int. Cl.: B60G 3/20, B60G 15/06, B62D 7/06, B62D 5/04, B60G 3/14, B60G 3/06

(54) **WHEEL MODULE AND VEHICLE**
RADMODUL UND FAHRZEUG
MODULE DE ROUE ET VÉHICULE

(43) Date of publication of application: 07.02.2024
(73) Proprietor: Schaeffler Technologies AG & Co. KG, 91074 Herzogenaurach (DE)
(72) Inventor: QIU, Yong, Shanghai 201804 (CN); DI, Jie, Shanghai 201804 (CN); CHEN, Chunhui, Shanghai 201805 (CN)
(86) International application number: PCT/CN2021/083902
(87) International publication number: WO 2021/110183

(56) References cited:
- CN-A- 102 317 096
- CN-A- 110 053 660
- CN-A- 111 923 673
- DE-A1- 4 025 543
- US-A1- 2020 070 883
- US-A1- 2021 008 939
- US-B1- 6 336 514

## Description

### Technical Field

The present disclosure relates to the field of vehicles, in particular to a wheel module of a motor vehicle and a vehicle including the wheel module.

### Background

In order to enable a motor vehicle, for example, to drive on a narrow curve or park in a narrow parking space, the industry proposes a wheel module with a large wheel steering angle (for example, up to 90 degrees), which is also referred to as an intelligent steering module. The wheel module combines a driving device for a wheel, a steering device and a suspension in one compact assembly unit.
US 2021/008939 A1 discloses a suspension system for a wheel of a motor vehicle axle, which includes a wheel support mounted on the vehicle body through multiple links. The system features a first supporting element and a second supporting element, with a vehicle wheel rotatably mounted on the first supporting element. The first supporting element is designed to rotate relative to the second supporting element to transmit steering torque via a steering actuator located on the wheel support. Additionally, the first supporting element is connected to the vehicle body by an upper wishbone, while the second supporting element is connected exclusively by a lower wishbone.
US 2020/070883 A1 discloses a steering knuckle for a vehicle turning wheel, which includes a steering end connected to the turning wheel and a driving end connected to a steering driving component. The driving end is positioned either above or below the side of the steering end, and both ends are fixedly connected. The steering end features a first connecting hole, while the driving end has a second connecting hole, with the axes of these holes lying in the same plane but not parallel to each other.

CN 110 053 660 A discloses a wire control steering mechanism for an electric wheel-drive vehicle, along with a control method for the mechanism. The steering mechanism includes an electric wheel with a coaxially arranged motor shaft, a steering section with a first connecting hole for the motor shaft, and a protrusion with a second connecting hole for a vertically fixed turbine shaft. The mechanism also features a motor seat that can rotate relative to the steering section, a lower transverse arm connected to the vehicle body and hinged to the motor seat, and a steering motor with a worm engaged with the turbine shaft. This configuration allows for direct steering of the vehicle wheels through a telex connection using the steering motor and a worm and gear structure.

There is an urgent need in this field to provide a simple structure for such wheel module while maintaining good working performance.

### Summary

The present disclosure aims to overcome or at least alleviate the above deficiencies of the prior art, and provides a wheel module and a vehicle.

According to a first aspect of the present disclosure, a wheel module is provided for connecting to a vehicle frame of a motor vehicle, comprising a steering assembly, a joint piece, and a rocker arm.

The steering assembly is connected to the joint piece to form a rigid piece, the joint piece is for wheel installation, the rocker arm connects the joint piece and the vehicle frame,
the rigid piece can be driven to rotate relative to the vehicle frame around a virtual shaft axis to change the orientation of the wheel, and the virtual shaft axis passes through the steering assembly and the joint piece.

According to the invention, the wheel module further comprises a drive piece bracket for supporting a drive piece and the steering assembly. The drive piece bracket is fixed to the rocker arm.

The steering assembly and the drive piece bracket are connected with relative rotation by a first rotational connection assembly, the joint piece and the rocker arm are connected with relative rotation by a second rotational connection assembly, and a connecting line between the first rotational connection assembly and the second rotational connection assembly defines the virtual shaft axis.

In at least one embodiment, the joint piece is fixed on a side of the steering assembly close to the wheel, and the steering assembly has a portion offset from the virtual shaft axis to provide a space for the wheel.

In at least one embodiment, the drive piece bracket is formed with a first limiting protrusion and a second limiting protrusion for defining a rotation angle of the steering assembly.

In at least one embodiment, the steering assembly comprises a steering arm and a steering wheel which are rigidly connected, wherein the steering wheel comprises lugs to interact with the first limiting protrusion and the second limiting protrusion to realize limitation to the rotation angle.

In at least one embodiment, the first rotational connection assembly comprises a bearing and an installation ring.

The steering wheel comprises a wheel body and a wheel center shaft which are coaxially arranged, with the outer diameter of the wheel body greater than that of the wheel center shaft;
an inner ring of the bearing and the wheel center shaft are connected without relative rotation,
the installation ring encircles the bearing, the installation ring and an outer ring of the bearing are connected without relative rotation,
and the installation ring is fixed to the drive piece bracket.

In at least one embodiment, the installation ring is formed with a plurality of ring fixing holes, and the wheel body is formed with at least one wheel through hole; the wheel through hole can be rotated to a position aligned with the ring fixing hole, allowing a first fastener to pass through the wheel through hole, extend into the ring fixing hole and fix the installation ring to the drive piece bracket.

In at least one embodiment, the steering arm and the wheel body are connected by a second connecting piece, and the second connecting piece extends into the wheel through hole.

In at least one embodiment, the drive piece bracket is formed with a receiving hole, the drive piece bracket comprises a first bracket and a second bracket that can be separated in the radial direction of the receiving hole, and the receiving hole at least partially receives the steering wheel.

In at least one embodiment, the second rotational connection assembly comprises a ball pin assembly and a ball pin bracket; the ball pin bracket is fixed to the rocker arm,
the ball pin assembly comprises a ball pin and a ball seat, the ball seat is fixed to the joint piece, the neck of the ball pin is fixed to the ball pin bracket;
and the installation position of the ball pin bracket on the rocker arm can be adjusted.

In at least one embodiment, the wheel module further comprises a vibration damper, a first end of the vibration damper is rotatably connected to the rocker arm, and a second end of the vibration damper is for connecting to the vehicle frame.

In at least one embodiment, the center of the wheel is closer to the first end of the vibration damper than the area of the vehicle frame connected to the rocker arm.

In at least one embodiment, the rocker arm is rotatably connected to the vehicle frame at two spaced apart connecting parts, and the ratio of the distance between the first end and a connecting line between the two connecting parts to that between the center of the wheel and the connecting line is 0.8 to 0.9.

In at least one embodiment, the rocker arm is for rotatably connecting to the vehicle frame, and a buffer bush is arranged between the rocker arm and the vehicle frame.

According to a second aspect of the present disclosure, a vehicle is provided, comprising a vehicle frame and the wheel module according to the present disclosure.

The wheel module according to the present disclosure has a simple and compact structure, and can provide large-angle steering for the wheel. The vehicle according to the present disclosure has the same advantages.

### Brief Description of the Drawings

- FIG. 1: is a schematic diagram of a partial structure of a wheel module according to an embodiment of the present disclosure.
- FIG. 2: is an exploded schematic diagram of a partial structure of a wheel module according to an embodiment of the present disclosure.
- FIG. 3: is an exploded schematic diagram of a steering driving assembly in FIG. 2 .
- FIG. 4: is a schematic diagram of a partial structure of a wheel module at a steering wheel according to an embodiment of the present disclosure.
- FIGs. 5 to 7: are schematic diagrams of a steering device in FIG. 4 in three different rotational positions.
- FIG. 8: is a schematic diagram of a ball pin assembly of a wheel module according to an embodiment of the present disclosure.
- FIG. 9: is a cross-sectional view of FIG. 8.

### Detailed Description

Exemplary embodiments of the present invention will be described below with reference to the attached drawings. It should be understood that these specific descriptions are only used to teach those skilled in the art how to implement the present invention, and are neither intended to be exhaustive of all possible variations of the present invention nor to limit the scope of the present invention.

Unless otherwise specified, the present disclosure uses the up-down relationship shown in the figure to describe the positional relationship of each component. It should be understood that the up-down relationship is not absolute, and the spatial orientations corresponding to the components may change accordingly with different product application scenarios and working postures.

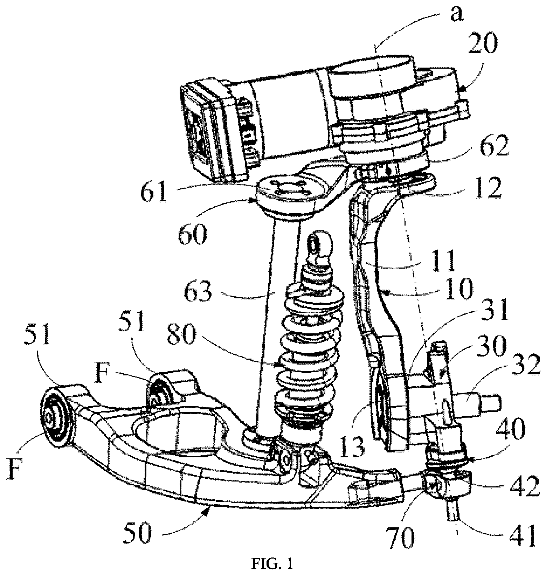

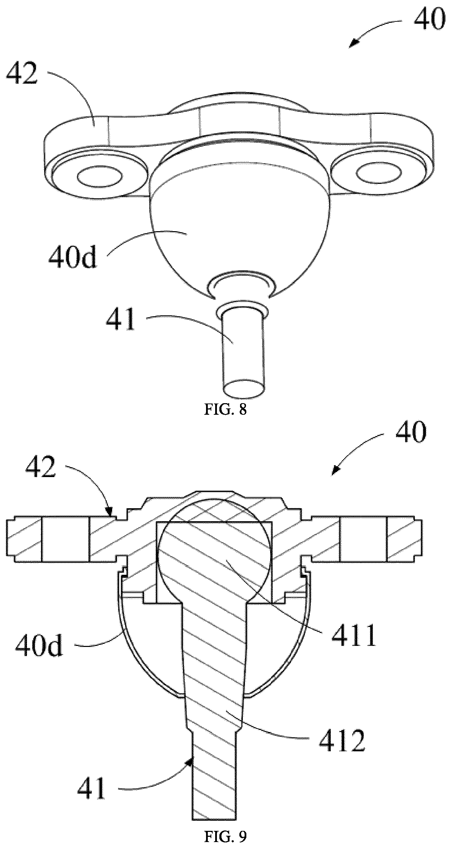

Referring to FIGs. 1 to 9 , the wheel module according to the present disclosure is for connecting to a vehicle frame (or a body, not shown in the figure) of a motor vehicle, so that the wheel (not shown in the figure) in the wheel module is steered relative to the vehicle frame (also known as changing the direction of the wheel) within a large angle range (for example, greater than or equal to 90°).

The wheel module comprises a driving device for the wheel, a steering device (for realizing the steering of the wheel), a suspension, and the wheel.

FIG. 1 shows structures of main components of a wheel module.

Referring to FIG. 1 , the wheel module (steering device) according to the present disclosure comprises a steering assembly (including a steering arm 10 and a steering wheel D), a drive piece 20, a joint piece 30, a rocker arm 50, a drive piece bracket 60, a first rotational connection assembly (including a bearing B and an installation ring R), a second rotational connection assembly (including a ball pin assembly 40 and a ball pin bracket 70), and a vibration damper 80.

The joint piece 30 is for wheel installation. The steering assembly and the joint piece 30 are connected in an antitorque manner (in a non-rotatable manner) to form a rigid piece, which can be driven by the drive piece 20 to steer relative to the vehicle frame. The rocker arm 50 connects the vehicle frame and the joint piece, and the rocker arm 50 provides an installation base for the drive piece bracket 60.

The steering assembly and the drive piece bracket 60 are connected with relative rotation by the first rotational connection assembly, and the joint piece 30 and the rocker arm 50 are connected with relative rotation by the second rotational connection assembly.

The drive piece 20 is, for example, a motor, which can drive a rigid body formed by the steering assembly and the joint piece 30 to rotate around the virtual shaft axis a relative to the vehicle frame. The virtual shaft axis a is defined by a connecting line between the first rotational connection assembly and the second rotational connection assembly. More specifically, one end of the virtual shaft axis a passes through a rotation center of a bearing B described below, and the other end passes through a rotational connection point between the joint piece 30 and the ball pin bracket 70.

Since a main body 11 of the steering arm 10 is offset from the virtual shaft axis a (the virtual shaft axis a is located between the main body 11 and the wheel), the virtual shaft axis a is virtual, and the virtual shaft axis a is a center axis around which the wheel rotates when steering. The steering assembly has a portion offset from the virtual shaft axis a to provide a space for the wheel.

Specifically, the main body 11 of the steering arm 10 is substantially elongated, the two ends of the main body 11 in the extending direction are respectively connected with a first connecting part 12 and a second connecting part 13, the first connecting part 12 is connected to the steering wheel D, and the second connecting part 13 is connected to the joint piece 30. The first connecting part 12 is bent relative to the main body 11 towards the direction of the wheel at an angle of about 90°.

The joint piece 30 is substantially cylindrical, and two ends of the joint piece in the axial direction are respectively a first joint end 31 and a second joint end 32. The second joint end 32 is for wheel installation, and the first joint end 31 is fixedly connected to the second connecting part 13.

Both the joint piece 30 and the first connecting part 12 are located on a side of the main body 11 close to the wheel. Since there are many parts to be installed near the wheel (for example, including a hub bearing, the wheel, a braking device, etc.), the main body 11 is offset from the virtual shaft axis a of the joint piece 30, which provides an installation space for the wheel and braking device, and provides better conditions for the compact layout of the wheel module.

The housing of the drive piece 20 is fixedly installed to the drive piece bracket 60. The drive piece bracket 60 is fixedly connected to the rocker arm 50.

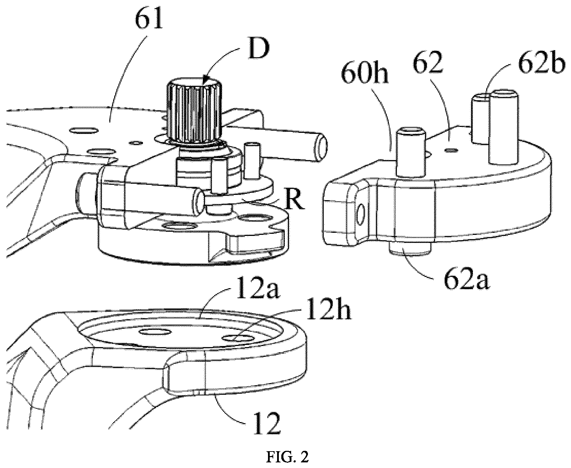

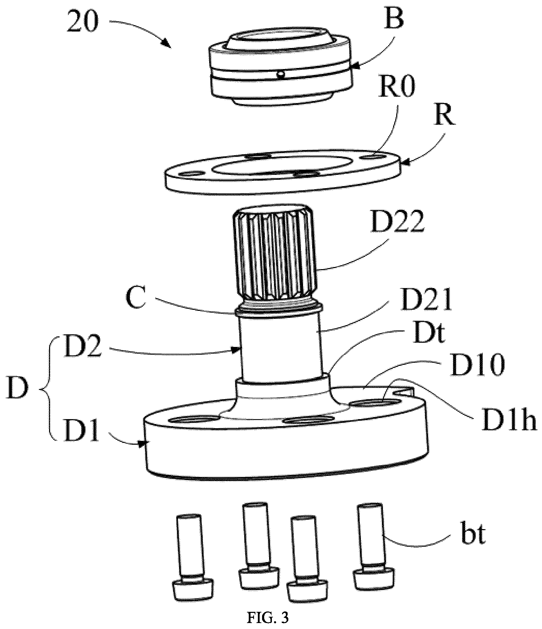

FIG. 2 and FIG. 3 describe the installation relationship among the drive piece 20, the drive piece bracket 60 and the steering assembly.

The drive piece 20 is connected to the steering arm 10 via the steering wheel D.

The steering wheel D comprises a wheel body D1 and a wheel center shaft D2 which are connected to each other in an torque-resistant manner. Optionally, the steering wheel D is integrally formed, that is, the wheel body D1 and the wheel center shaft D2 form an integrated part. The wheel center shaft D2 is connected to one axial end of the wheel body D1, and the outer diameter of the wheel body D1 is greater than that of the wheel center shaft D2. The wheel center shaft D2 comprises a shaft area D21 and a spline area D22 at different positions in the axial direction, and the spline area D22 and the wheel body D1 are respectively located on two axial sides of the shaft area D21.

Splines are formed on the outer peripheral portion of the spline area D22 for receiving the torque of a driving component, thereby realizing the rotation of the steering wheel D. For example, a gear train in the drive piece 20 is in transmission connection with the splines of the spline area D22.

The shaft area D21 is for installing the bearing B. After the bearing B passes through the spline area D22, an inner ring of the bearing B is connected to the shaft area D21 in an interference fit manner.

Optionally, a lug boss Dt is formed between the shaft area D21 and the wheel body D1, and the outer diameter of the lug boss Dt is slightly larger than that of the shaft area D21. One end of the bearing B biases against the lug boss Dt to obtain an axial limit, and the other end of the bearing B is limited by a snap ring C (the snap ring C is fixed to the shaft area D21). It should be understood that the snap ring C and the shaft area D21 are not disassembled in FIG. 3 , but in the actual installation process, the bearing B is installed first, and then the snap ring C.

An outer ring of the bearing B is fixed to the drive piece bracket 60 via the installation ring R. Specifically, the outer ring and the installation ring R are embedded in the middle hole of the installation ring R in an interference fit manner. The installation ring R has a plurality of (four in the embodiment) ring fixing holes R0 distributed in the circumferential direction, and the first fastener bt (such as a screw) can pass through the ring fixing holes R0 to fix the installation ring R on the drive piece bracket 60.

Optionally, the bearing B is a radial bearing capable of bearing radial loads. It should be understood that in other possible implementations, the bearing B may also be other types of bearings.

The installation ring R is very close to the wheel body D1 in the axial direction. In order to enable the first fastener bt to pass through the installation ring R from a side of the installation ring R close to the wheel body D1 and screw the first fastener to the drive piece bracket 60, the wheel body D1 is formed with the wheel through hole D1h aligned with the ring fixing hole R0. The inner diameter of the wheel through hole D1h is greater than the outer diameter of the first fastener bt, so that the first fastener bt can pass through the wheel through hole D1h and then extend into the ring fixing hole R0.

Optionally, the distance from the ring fixing hole R0 to the virtual shaft axis a is equal to that from the wheel through hole D1h to the virtual shaft axis a (for short, the ring fixing hole R0 and the wheel through hole D1h are located on the same reference circle).

It should be understood that when the inner diameter of the wheel through hole D1h is large enough to allow the first fastener bt to pass through, the distance from the ring fixing hole R0 to the virtual shaft axis a may not be equal to that from the wheel through hole D1h to the virtual shaft axis a (the reference circle for the wheel through hole D1h may also be different from that for the ring fixing hole R0).

It should be understood that since the wheel body D1 can rotate relative to the installation ring R, the number of the wheel through holes D1h may be less than that of the ring fixing holes R0, for example, the number of the wheel through holes D1h may be only one, while the number of the ring fixing holes R0 is four. In this case, the wheel through hole D1h can be aligned with one ring fixing hole R0 at a time by rotating the wheel body D1, so as to install the first fastener bt extending into the ring fixing hole R0. After each first fastener bt is installed, the wheel body D1 is rotated, so that the wheel through hole D1h is aligned with the next ring fixing hole R0.

It should be understood that no matter whether the wheel through holes D1h are in one-to-one correspondence with the ring fixing holes R0 or not, during the rotation of the steering wheel D relative to the drive piece bracket 60, the wheel through holes D1h and the ring fixing holes R0 are not aligned in many states. So at these positions, the first fastener bt is inconvenient to be disassembled from the installation ring R. In particular, for ordinary users, the wheel module according to the present disclosure is anti-disassembly.

It should be understood that in order to allow the first fastener bt to be installed to the installation ring R without interfering with the wheel body D1, the wheel through hole D1h may not be in a complete hole shape, but, for example, as a notch of the outer peripheral area of the wheel body D1. In other words, the outer peripheral portion of the wheel body D1 is partially recessed radially inward, for example, the wheel body D1 is formed in a quincunx shape. The wheel through hole D1h referred to in the present disclosure comprises notches or recesses of this type.

The drive piece bracket 60 comprises a first bracket 61, a second bracket 62, and a supporting arm 63.

The first bracket 61 and the second bracket 62 are connected together and arranged above the steering arm 10 and below the drive piece 20. The supporting arm 63 is substantially tubular (or rod-shaped) and connects the first bracket 61 and the rocker arm 50.

The first bracket 61 and the second bracket 62 surround the bearing B on both radial sides of the bearing B respectively, and the first bracket 61 and the second bracket 62 can be separated and assembled in the radial direction of the bearing B. Opposite parts of the first bracket 61 and the second bracket 62 are respectively formed with a semicircular notch, and when the first bracket 61 and the second bracket 62 are installed together, the two semicircular notches close up to form a circular receiving hole 60h in which the bearing B is received.

The above structures of the first bracket 61 and the second bracket 62 can facilitate the assembly of the steering wheel D and connecting pieces thereof with the drive piece bracket 60. Optionally, for example, the steering wheel D on which the bearing B is installed can be assembled with the first bracket 61, and the installation ring R can be fixed to the first bracket 61 with two first fasteners bt. Then, the first bracket 61 and the second bracket 62 are connected together in a close-up manner, for example, by bolts. Next, the other half area of the installation ring R is fixed to the second bracket 62 with the other two first fasteners bt, so that the first bracket 61, the second bracket 62 and the installation ring R are firmly connected together.

It should be understood that the present disclosure does not limit the number of the first fasteners bt, but preferably, at least one first fastener bt connects the installation ring R with the first bracket 61, and at least one first fastener bt connects the installation ring R with the second bracket 62.

The steering wheel D and the first connecting part 12 of the steering arm 10 are connected without relative rotation. Optionally, the first connecting part 12 and the wheel body D1 are connected by a second fastener (not shown in the figure, such as a screw or a bolt). The first connecting part 12 is formed with a plurality of connecting holes 12h of first connecting part. Optionally, the second fastener passes through the connecting holes 12h of first connecting part and the wheel through hole D1h in sequence to connect the first connecting part 12 with the wheel body D1.

It should be understood that the wheel through hole D1h here also matches up with the second fastener. Preferably, the wheel through hole D1h is a threaded hole. In the case that the second fastener extends into the wheel through hole D1h, once the wheel module is installed, the steering wheel D will be more difficult to be removed from the drive piece bracket 60 (because it is difficult to remove the first fastener bt at this time), so that the anti-disassembly performance of the wheel module is better.

It should be understood that it is also possible to match up with the second fastener through other holes different from the wheel through hole D1h.

Optionally, the surface of the first connecting part 12 facing the wheel body D1 is partially recessed in a direction away from the wheel body D1 to form a concave cavity 12a, the wheel body D1 can be partially accommodated in the concave cavity 12a, and the wheel body D1 is adapted to the contour of the concave cavity 12a. Therefore, during installation, the concave cavity 12a has an auxiliary positioning effect on the wheel body D1, thereby facilitating the centering positioning of the wheel body D 1 and the first connecting part 12.

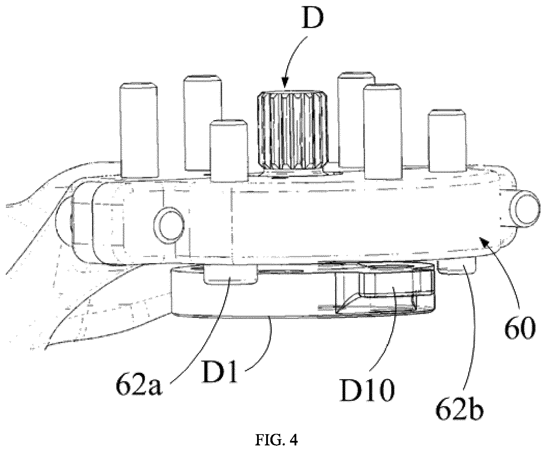

Referring to FIGs. 4 to 7 , the second bracket 62 also works in limiting the rotation angle of the steering wheel D.

A first limiting protrusion 62a and a second limiting protrusion 62b are formed on an end surface of the second bracket 62 direction the wheel body D1. In this embodiment, each of the first limiting protrusion 62a and the second limiting protrusion 62b is the head of a screw, and these two screws can also work in fixing the housing of the drive piece 20 to the second bracket 62. It should be understood that other screws that only function as fasteners may also be connected to the second bracket 62, and these screws will not interfere with the steering wheel D during the rotation of the steering wheel D.

A lug D10 protruding radially outward is formed on the outer peripheral portion of the wheel body D1. The first limiting protrusion 62a and the second limiting protrusion 62b are circumferentially located on two sides of the lug D10, respectively. During the rotation of the wheel body D1 relative to the drive piece bracket 60, the lug D10 biases against the first limiting protrusion 62a or the second limiting protrusion 62b at a specified rotational limit position to be restricted from further rotation. Therefore, the two limiting protrusions work in limiting the rotation angle of the steering wheel D, so as to avoid excessive rotation of the steering wheel D due to uncontrollable factors.

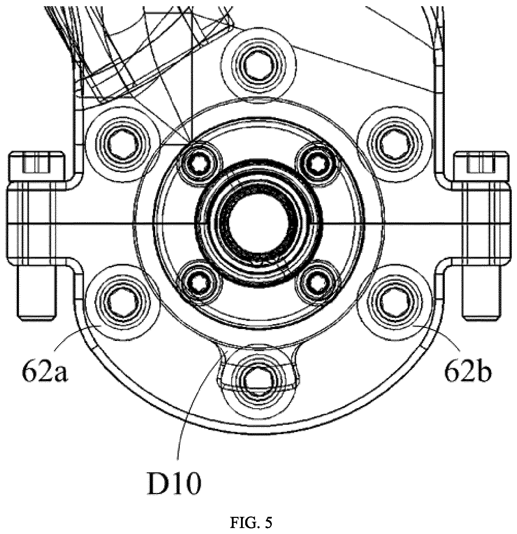

FIG. 5 shows a scenario where the lug D10 moves between the first limiting protrusion 62a and the second limiting protrusion 62b. It should be understood that the screw overlapping with the lug D10 in the figure actually has a height difference from the lug D10 and does not interfere with it.

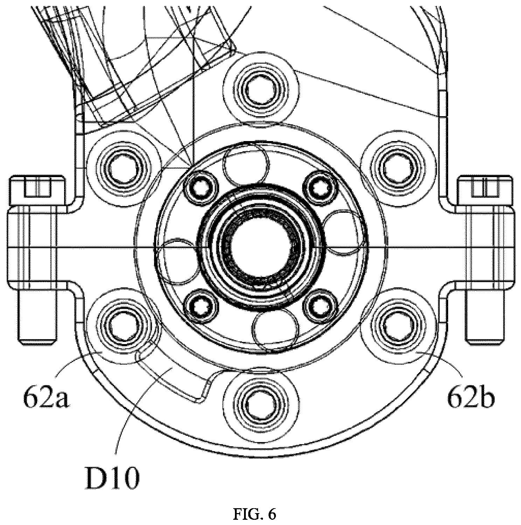

FIG. 6 shows a scenario where the lug D10 is blocked by the first limiting protrusion 62a and cannot continue to rotate clockwise.

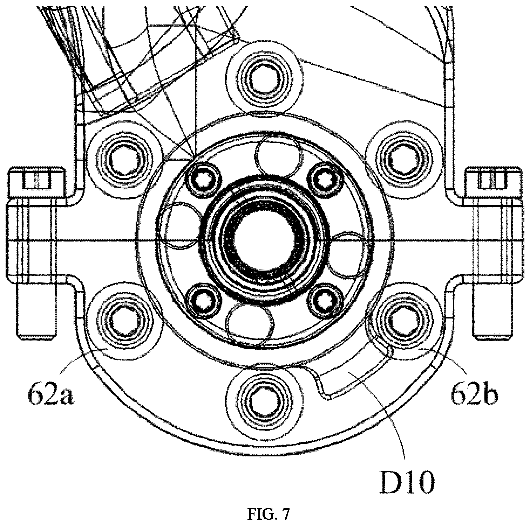

FIG. 7 shows a scenario where the lug D10 is blocked by the second limiting protrusion 62b and cannot continue to rotate counterclockwise.

Assuming that the rotation angle of the lug D10 is 0° when the vehicle is running straight, optionally, the rotational limit angles of the lug D10 defined by the first limiting protrusion 62a and the second limiting protrusion 62b are respectively - 45° and 90°. When the rotation angle of the lug D 10 is 90°, the vehicle can run sideways.

It should be understood that the first limiting protrusion 62a and the second limiting protrusion 62b may not be screws, but protruding parts forming an integral piece with the second bracket 62.

Next, FIG. 1 , FIG. 8 and FIG. 9 describe a rotational connection structure of the virtual shaft axis a at the ball pin assembly 40 and the ball pin bracket 70.

The ball pin assembly 40 comprises a ball pin 41, a ball seat 42 and a dust cover 40d. The ball pin 41 comprises a ball head 411 and a neck 412. The ball head 411 is defined in a ball socket formed by the ball seat 42, so that the ball pin 41 can rotate in all directions relative to the ball seat 42.

The ball seat 42 is fixed at the lower part of the joint piece 30, and the neck 412 is fixedly connected to the ball pin bracket 70.

A main body of the ball pin bracket 70 is in the shape of a sleeve, the neck 412 passes through the sleeve-shaped structure. The outer wall of the neck 412 match up with the inner wall of the sleeve (both are in the shape of a conical surface); and the neck 412 and the sleeve are locked by a nut, so that the ball pin 41 and the ball pin bracket 70 are fixed together.

Preferably, the ball pin bracket 70 is fixed to the rocker arm 50 by means of a threaded connection structure. For example, one of the ball pin bracket 70 and the rocker arm 50 is formed with screw holes, and the other is formed with studs that engages with the screw holes. By adjustment of the distance that the stud extends into the screw hole, the distance between the sleeve-shaped structure of the ball pin bracket 70 and the rocker arm 50 may be adjusted, thereby regulating the distance between the ball pin 41 and the rocker arm 50. It should be understood that in order to prevent the connection between the ball pin bracket 70 and the rocker arm 50 from getting loose, other fasteners may also be arranged between the ball pin bracket 70 and the rocker arm 50; or the connection between the ball pin bracket 70 and the rocker arm 50 is not limited to a threaded connection in which the connection position is variable (mainly, the distance between a sleeve structure of the ball pin bracket 70 and the rocker arm 50 is variable). Due to the above adjustment structure, the wheel module according to the present disclosure has low requirements for the precision of each part, and the error occurred in parts matching may be compensated through adjustment during assembly.

The ball pin assembly 40, as the lower end of the virtual shaft axis a, works in supporting the weight of the vehicle body. Since the ball pin has the advantage of bearing loads in the vertical and horizontal directions (also known as vertical and radial directions), high reliability of the connection structure is ensured.

Returning to FIG. 1 , the connection structure between the rocker arm 50 and the vehicle frame is described.

The rocker arm 50 is rotatably connected to the vehicle frame at two connecting parts 51. Connecting lines between the positions of the two connecting parts 51 and the position of the ball pin assembly 40 form a triangular structure. The rocker arm 50 can transmit and share the force between the steering arm 10 and the vehicle frame in all directions, thereby reducing the event of the wheel deviating the virtual shaft axis a.

The connecting part 51 is in the shape of a sleeve, and a cylindrical buffer bush F is arranged in the sleeve. For example, the rocker arm 50 may be connected to the vehicle frame by passing a bolt through the buffer bush F. The buffer bush F may be made up of for example rubber.

The above rotational connection structure enables the rocker arm 50 to swing slightly in the vertical direction relative to the vehicle frame, or the relative height between the rocker arm 50 and the vehicle frame can be slightly adjusted, thereby adapting to various driving conditions of the vehicle. The buffer bush F enables the vibration energy caused by the position change to be absorbed when the relative position of the rocker arm 50 and the vehicle frame slightly changes.

A vibration damper 80 is also arranged between the rocker arm 50 and the vehicle frame. The first end (lower end) of the vibration damper 80 is rotatably connected to the rocker arm 50, and the second end (upper end) of the vibration damper 80 is rotatably connected to the vehicle frame. The vibration damper 80 can provide damping between the vehicle frame and the rocker arm 50 to damp vibration.

Especially when the wheel goes over bumps, or the wheel is bouncing, the vibration can be absorbed by the buffer bush F and the vibration damper 80.

Optionally, the connection point between the vibration damper 80 and the rocker arm 50 (or the first end of the vibration damper 80) is arranged close to the ball pin assembly 40. In other words, the distance between the connection point and the ball pin assembly 40 is smaller than that between the connection point and the connecting line between the two connecting parts 51. Therefore, the distance from the first end to the center of the wheel is shorter and that from the first end to the connecting line between the two connecting parts 51 (hereinafter referred to as a first distance) is longer. If the distance from the center of the wheel to the connecting line between the two connecting parts 51 is referred to as a second distance, optionally, the ratio of the first distance to the second distance is 0.8 to 0.9. So the vibration damping stroke of the vibration damper 80 is larger, resulting in better vibration damping effect.

It should be understood that the present disclosure further provides a vehicle comprising the above wheel module. For example, the vehicle may comprise four of the above wheel modules.

Some of the beneficial effects of the above-mentioned embodiments of the present disclosure are briefly described hereinafter.
(i) The wheel module according to the present disclosure is structurally compact and can realize the steering of the wheel in a large range.
(ii) A connection structure between the drive piece 20 and the steering assembly and the drive piece bracket 60 are both assembled from multiple parts. That means the whole wheel module is easy for disassembly and maintenance. In addition, the parts can be easily fabricated with low cost.
(iii) The joint piece 30 and the rocker arm 50 are connected via the ball pin assembly 40 and the ball pin bracket 70; by adjusting the installation position of the ball pin 70 relative to the rocker arm 50, the connection parameters of the joint piece 30 and the rocker arm 50 may be adjusted; and the requirements for the machining accuracy of the ball pin assembly 40 and the ball pin bracket 70 are low, so the manufacturing cost of the parts is low.
(iv) The installation positions of the vibration damper 80, the rocker arm 50 and the ball pin assembly 40 are reasonable, the movable range of the vibration damper is large, and thus the vibration damping effect is good.

It should be understood that the above-mentioned embodiments are exemplary only and are not intended to limit the present invention. Those skilled in the art can make various modifications and changes to the above-mentioned embodiments according to the teaching of the present invention without departing from the scope of the present invention as defined in the appended claims.

### List of reference numerals

- 10: : steering arm;
- 11: : main body;
- 12: : first connecting part;
- 12a: : concave cavity;
- 12h: : connecting hole of first connecting part;
- 13: : second connecting part;
- 20: : drive piece;
- B: : bearing;
- R: : installation ring;
- R0: : ring fixing hole;
- D: : steering wheel;
- D1: : wheel body;
- D10: : lug;
- D2: : wheel center shaft;
- D21: : shaft area;
- D22: : spline area;
- D1h: : wheel through hole;
- Dt: : lug boss;
- bt: : first fastener;
- 30: : joint piece;
- 31: : first joint end;
- 32: : second joint end;
- 40: : ball pin assembly;
- 41: : ball pin;
- 411: : ball head;
- 412: : neck;
- 42: : ball seat;
- 40d: : dust cover;
- 50: : rocker arm;
- 51: : connecting part;
- 60: : drive piece bracket;
- 61: : first bracket;
- 62: : second bracket;
- 63: : supporting arm;
- 60h: : receiving hole;
- 70: : ball pin bracket;
- 80: : vibration damper;
- C: : snap ring;
- F: : buffer bush;
- a: : virtual shaft axis.

## Claims

1. A wheel module for connection to a vehicle frame of a motor vehicle, comprising a steering assembly, a joint piece (30), and a rocker arm (50), wherein the steering assembly is connected to the joint piece (30) to form a rigid piece, the joint piece (30) is for wheel installation, the rocker arm (50) is connected to the joint piece (30) and the vehicle frame, and the rigid piece can be driven to rotate relative to the vehicle frame around a virtual shaft axis (a) to change the direction of the wheel, the virtual shaft axis (a) passing through the steering assembly and the joint piece (30), **characterised by** a drive piece bracket (60) to support a drive piece and the steering assembly, wherein the drive piece bracket (60) is fixed to the rocker arm (50), the steering assembly and the drive piece bracket (60) are connected with relative rotation by a first rotational connection assembly, and the joint piece (30) and the rocker arm (50) are connected with relative rotation by a second rotational connection assembly, and a connecting line between the first rotational connection assembly and the second rotation connecting assembly defines the virtual shaft axis (a).

2. The wheel module according to claim 1, wherein the joint piece (30) is fixed to a side of the steering assembly close to the wheel, and the steering assembly has a portion offset from the virtual shaft axis (a) to provide a space for the wheel.

3. The wheel module according to claim 1, wherein the drive piece bracket (60) is formed with a first limiting protrusion (62a) and a second limiting protrusion (62b) for defining the rotation angle of the steering assembly.

4. The wheel module according to claim 3, wherein the steering assembly comprises a steering arm (10) and a steering wheel (D) which are rigidly connected, wherein the steering wheel (D) comprises lugs (D10) to interact with the first limiting protrusion (62a) and the second limiting protrusion (62b) to realize limitation to the rotation angle.

5. The wheel module according to claim 4, wherein the first rotational connection assembly comprises a bearing (B) and an installation ring (R), wherein the steering wheel (D) comprises a wheel body (D1) and a wheel center shaft (D2) which are coaxially arranged, with an outer diameter of the wheel body (D1) greater than that of the wheel center shaft (D2); an inner ring of the bearing (B) and the wheel center shaft (D2) are connected without relative rotation, the installation ring (R) encircles the bearing (B), the installation ring (R) and an outer ring of the bearing (B) are connected without relative rotation, and the installation ring (R) is fixed to the drive piece bracket (60).

6. The wheel module according to claim 5, wherein the installation ring (R) is formed with a plurality of ring fixing holes (R0), the wheel body (D1) is formed with at least one wheel through hole (D1h); the wheel through hole (D1h) can be rotated to a position aligned with the ring fixing hole (R0), allowing a first fastener (bt) to pass through the wheel through hole (D1h), extend into the ring fixing hole (R0) and fix the installation ring (R) to the drive piece bracket (60).

7. The wheel module according to claim 6, wherein the steering arm (10) and the wheel body (D1) are connected by a second connecting piece, and the second connecting piece extends into the wheel through hole (D1h).

8. The wheel module according to claim 4, wherein the drive piece bracket (60) is formed with a receiving hole (60h), the driver piece bracket (60) comprises a first bracket (61) and a second bracket (62) that can be separated in the radial direction of the receiving hole (60h), and the receiving hole (60h) at least partially receives the steering wheel (D).

9. The wheel module according to claim 1, wherein the second rotational connection assembly comprises a ball pin assembly (40) and a ball pin bracket (70), wherein the ball pin bracket (70) is fixed to the rocker arm (50), the ball pin assembly (40) comprises a ball pin (41) and a ball seat (42), the ball seat (42) is fixed to the joint piece (30), the neck (412) of the ball pin (41) is fixed to the ball pin bracket (70), and the installation position of the ball pin bracket (70) on the rocker arm (50) can be adjusted.

10. The wheel module according to any one of claims 1 to 9, wherein the wheel module further comprises a vibration damper (80), wherein a first end of the vibration damper (80) is rotatably connected to the rocker arm (50), and a second end of the vibration damper (80) is for connecting to the vehicle frame.

11. The wheel module according to claim 10, wherein the center of the wheel is closer to the first end of the vibration damper (80) than the area of the vehicle frame connected to the rocker arm (50).

12. The wheel module according to claim 11, wherein the rocker arm (50) is rotatably connected to the vehicle frame at two spaced apart connecting parts (51), and a ratio of a distance between the first end and a connecting line between the two connecting parts (51) to that between a center of the wheel to the connecting line between the two connecting parts (51) is 0.8 to 0.9.

13. The wheel module according to claim 1, wherein the rocker arm (50) is for rotatably connecting to the vehicle frame, and a buffer bush (F) is arranged between the rocker arm (50) and the vehicle frame.

14. A vehicle, comprising a vehicle frame and the wheel module according to any one of claims 1 to 13.

## Patentansprüche

1. Radmodul zur Verbindung mit einem Fahrgestell eines Kraftfahrzeugs, umfassend eine Lenkbaugruppe, ein Gelenkstück (30) und einen Kipphebel (50), wobei die Lenkbaugruppe mit dem Gelenkstück (30) unter Ausbilden eines starren Stücks verbunden ist, das Gelenkstück (30) zur Radmontage dient, der Kipphebel (50) mit dem Gelenkstück (30) und dem Fahrgestell verbunden ist und das starre Stück zum Drehen relativ zu dem Fahrgestell um eine virtuelle Wellenachse (a) angetrieben werden kann, um die Richtung des Rades zu ändern, wobei die virtuelle Wellenachse (a) durch die Lenkbaugruppe und das Gelenkstück (30) verläuft, **gekennzeichnet durch** eine Antriebsstückhalterung (60) zum Stützen eines Antriebsstücks und der Lenkbaugruppe, wobei die Antriebsstückhalterung (60) an dem Kipphebel (50) befestigt ist, die Lenkbaugruppe und die Antriebsstückhalterung (60) durch eine erste Drehverbindungsbaugruppe mit relativer Drehung verbunden sind und das Gelenkstück (30) und der Kipphebel (50) durch eine zweite Drehverbindungsbaugruppe mit relativer Drehung verbunden sind und eine Verbindungslinie zwischen der ersten Drehverbindungsbaugruppe und der zweiten Drehverbindungsbaugruppe die virtuelle Wellenachse (a) definiert.

2. Radmodul gemäß Anspruch 1, wobei das Gelenkstück (30) an einer Seite der Lenkbaugruppe in der Nähe des Rades befestigt ist und die Lenkbaugruppe einen Abschnitt aufweist, der von der virtuellen Wellenachse (a) versetzt ist, um Platz für das Rad bereitzustellen.

3. Radmodul nach Anspruch 1, wobei die Antriebsstückhalterung (60) mit einem ersten Begrenzungsvorsprung (62a) und einem zweiten Begrenzungsvorsprung (62b) zum Definieren des Drehwinkels der Lenkbaugruppe ausgebildet ist.

4. Radmodul nach Anspruch 3, wobei die Lenkbaugruppe einen Spurstangenhebel (10) und ein Lenkrad (D) umfasst, die starr verbunden sind, wobei das Lenkrad (D) Ansätze (D10) zum Zusammenwirken mit dem ersten Begrenzungsvorsprung (62a) und dem zweiten Begrenzungsvorsprung (62b) unter Erreichen einer Begrenzung des Drehwinkels umfasst.

5. Radmodul nach Anspruch 4, wobei die erste Drehverbindungsbaugruppe ein Lager (B) und einen Installationsring (R) umfasst, wobei das Lenkrad (D) einen Radkörper (D1) und eine Radmittelwelle (D2) umfasst, die koaxial angeordnet sind, wobei ein Außendurchmesser des Radkörpers (D1) größer ist als der der Radmittelwelle (D2); ein Innenring des Lagers (B) und die Radmittelwelle (D2) ohne relative Drehung verbunden sind, der Installationsring (R) das Lager (B) umgibt, der Installationsring (R) und ein Außenring des Lagers (B) ohne relative Drehung verbunden sind und der Installationsring (R) an der Antriebsstückhalterung (60) befestigt ist.

6. Radmodul nach Anspruch 5, wobei der Installationsring (R) mit einer Vielzahl von Ringbefestigungslöchern (R0) ausgebildet ist, der Radkörper (D1) mit mindestens einem Raddurchgangsloch (D1h) ausgebildet ist; das Raddurchgangsloch (D1h) in eine mit dem Ringbefestigungsloch (R0) ausgerichtete Position gedreht werden kann, was ermöglicht, dass ein erstes Befestigungselement (bt) durch das Raddurchgangsloch (D1h) durchgeht, sich in das Ringbefestigungsloch (R0) erstreckt und den Installationsring (R) an der Antriebsstückhalterung (60) befestigt.

7. Radmodul nach Anspruch 6, wobei der Spurstangenhebel (10) und der Radkörper (D1) durch ein zweites Verbindungsstück verbunden sind und sich das zweite Verbindungsstück in das Raddurchgangsloch (D1h) erstreckt.

8. Radmodul nach Anspruch 4, wobei die Antriebsstückhalterung (60) mit einem Aufnahmeloch (60h) ausgebildet ist, die Antriebsstückhalterung (60) eine erste Halterung (61) und eine zweite Halterung (62) umfasst, die in der radialen Richtung des Aufnahmelochs (60h) getrennt werden können, und das Aufnahmeloch (60h) das Lenkrad (D) mindestens teilweise aufnimmt.

9. Radmodul nach Anspruch 1, wobei die zweite Drehverbindungsbaugruppe eine Kugelzapfenbaugruppe (40) und eine Kugelzapfenhalterung (70) umfasst, wobei die Kugelzapfenhalterung (70) an dem Kipphebel (50) befestigt ist, die Kugelzapfenbaugruppe (40) einen Kugelzapfen (41) und einen Kugelsitz (42) umfasst, der Kugelsitz (42) an dem Gelenkstück (30) befestigt ist, der Hals (412) des Kugelzapfens (41) an der Kugelzapfenhalterung (70) befestigt ist und die Einbauposition der Kugelzapfenhalterung (70) an dem Kipphebel (50) eingestellt werden kann.

10. Radmodul nach einem der Ansprüche 1 bis 9, wobei das Radmodul ferner einen Schwingungsdämpfer (80) umfasst, wobei ein erstes Ende des Schwingungsdämpfers (80) drehbar mit dem Kipphebel (50) verbunden ist und ein zweites Ende des Schwingungsdämpfers (80) zum Verbindung mit dem Fahrgestell dient.

11. Radmodul nach Anspruch 10, wobei die Radmitte näher an dem ersten Ende des Schwingungsdämpfers (80) liegt als der mit dem Kipphebel (50) verbundene Bereich des Fahrgestells.

12. Radmodul nach Anspruch 11, wobei der Kipphebel (50) an zwei beabstandeten Verbindungsteilen (51) drehbar mit dem Fahrgestell verbunden ist und ein Verhältnis eines Abstands zwischen dem ersten Ende und einer Verbindungslinie zwischen den beiden Verbindungsteilen (51) zu dem zwischen einer Radmitte und der Verbindungslinie zwischen den beiden Verbindungsteilen (51) 0,8 bis 0,9 beträgt.

13. Radmodul nach Anspruch 1, wobei der Kipphebel (50) zum drehbaren Verbinden mit dem Fahrgestell dient und eine Pufferbuchse (F) zwischen dem Kipphebel (50) und dem Fahrgestell angeordnet ist.

14. Fahrzeug, umfassend ein Fahrgestell und das Radmodul nach einem der Ansprüche 1 bis 13.

## Revendications

1. Module de roue destiné à être relié à un châssis de véhicule d'un véhicule à moteur, comprenant un ensemble de direction, une pièce de jonction (30) et un culbuteur (50), dans lequel l'ensemble de direction est relié à la pièce de jonction (30) pour former une pièce rigide, la pièce de jonction (30) est destinée à l'installation de la roue, le culbuteur (50) est relié à la pièce de jonction (30) et au châssis de véhicule et la pièce rigide peut être entraînée pour tourner par rapport au châssis de véhicule autour d'un axe d'arbre virtuel (a) pour modifier la direction de la roue, l'axe d'arbre virtuel (a) traversant l'ensemble de direction et la pièce de jonction (30), **caractérisé par** un support (60) de pièce d'entraînement destiné à supporter une pièce d'entraînement et l'ensemble de direction, le support (60) de pièce d'entraînement étant fixé au culbuteur (50), l'ensemble de direction et le support (60) de pièce d'entraînement étant reliés en rotation relative par un premier ensemble de liaison rotative et la pièce de jonction (30) et le culbuteur (50) étant reliés en rotation relative par un second ensemble de liaison rotative, et une ligne de liaison entre le premier ensemble de liaison rotative et le second ensemble de liaison rotative définissant l'axe d'arbre virtuel (a).

2. Module de roue selon la revendication 1, dans lequel la pièce de jonction (30) est fixée sur un côté de l'ensemble de direction à proximité de la roue, et l'ensemble de direction présente une partie décalée par rapport à l'axe d'arbre virtuel (a) pour fournir un espace pour la roue.

3. Module de roue selon la revendication 1, dans lequel le support (60) de pièce d'entraînement est formé avec une première saillie de limitation (62a) et une seconde saillie de limitation (62b) pour définir l'angle de rotation de l'ensemble de direction.

4. Module de roue selon la revendication 3, dans lequel l'ensemble de direction comprend un bras de direction (10) et un volant de direction (D) qui sont reliés de manière rigide, le volant de direction (D) comprenant des pattes (D10) pour interagir avec la première saillie de limitation (62a) et la seconde saillie de limitation (62b) pour réaliser une limitation de l'angle de rotation.

5. Module de roue selon la revendication 4, dans lequel le premier ensemble de liaison rotative comprend un roulement (B) et une bague d'installation (R), le volant de direction (D) comprenant un corps de volant (D1) et un arbre central de volant (D2) qui sont disposés coaxialement, avec un diamètre extérieur du corps de volant (D1) supérieur à celui de l'arbre central de volant (D2) ; une bague intérieure du roulement (B) et l'arbre central de volant (D2) étant reliés sans rotation relative, la bague d'installation (R) entourant le roulement (B), la bague d'installation (R) et une bague extérieure du roulement (B) étant reliées sans rotation relative, et la bague d'installation (R) étant fixée au support (60) de pièce d'entraînement.

6. Module de roue selon la revendication 5, dans lequel la bague d'installation (R) est formée avec une pluralité de trous (R0) de fixation de bague, le corps de volant (D1) est formé avec au moins un trou traversant de volant (D1h) ; le trou traversant de volant (D1h) peut être tourné vers une position alignée avec le trou (R0) de fixation de bague, ce qui permet à une première fixation (bt) de passer à travers le trou traversant de volant (D1h), de s'étendre dans le trou (R0) de fixation de bague et de fixer la bague d'installation (R) au support (60) de pièce d'entraînement.

7. Module de roue selon la revendication 6, dans lequel le bras de direction (10) et le corps de volant (D1) sont reliés par une seconde pièce de liaison, et la seconde pièce de liaison s'étend dans le trou traversant de volant (D1h).

8. Module de roue selon la revendication 4, dans lequel le support (60) de pièce d'entraînement est formé avec un trou de réception (60h), le support (60) de pièce d'entraînement comprend un premier support (61) et un second support (62) qui peuvent être séparés dans la direction radiale du trou de réception (60h), et le trou de réception (60h) reçoit au moins partiellement le volant de direction (D).

9. Module de roue selon la revendication 1, dans lequel le second ensemble de liaison rotative comprend un ensemble goupille à rotule (40) et un support (70) de goupille à rotule, le support (70) de goupille à rotule étant fixé au culbuteur (50), l'ensemble goupille à rotule (40) comprenant une goupille à rotule (41) et un siège de bille (42), le siège de bille (42) étant fixé à la pièce de jonction (30), le col (412) de la goupille à rotule (41) étant fixé au support (70) de goupille à rotule, et la position d'installation du support (70) de goupille à rotule sur le culbuteur (50) pouvant être réglée.

10. Module de roue selon l'une quelconque des revendications 1 à 9, dans lequel le module de roue comprend en outre un amortisseur de vibrations (80), une première extrémité de l'amortisseur de vibrations (80) étant reliée de manière rotative au culbuteur (50), et une seconde extrémité de l'amortisseur de vibrations (80) étant destinée à être reliée au châssis de véhicule.

11. Module de roue selon la revendication 10, dans lequel le centre de la roue est plus proche de la première extrémité de l'amortisseur de vibrations (80) que la zone du châssis de véhicule reliée au culbuteur (50).

12. Module de roue selon la revendication 11, dans lequel le culbuteur (50) est relié de manière rotative au châssis de véhicule au niveau de deux parties de liaison espacées (51), et un rapport d'une distance entre la première extrémité et une ligne de liaison entre les deux parties de liaison (51) à celle entre un centre de la roue et la ligne de liaison entre les deux parties de liaison (51) est de 0,8 à 0,9.

13. Module de roue selon la revendication 1, dans lequel le culbuteur (50) est destiné à être relié de manière rotative au châssis de véhicule, et une douille tampon (F) est disposée entre le culbuteur (50) et le châssis de véhicule.

14. Véhicule, comprenant un châssis de véhicule et le module de roue selon l'une quelconque des revendications 1 à 13.
